(19) Europäisches Patentamt
European Patent Office
Office européen des brevets

(11) **EP 3 862 560 B1**

(12) **FASCICULE DE BREVET EUROPEEN**

(45) Date de publication et mention de la délivrance du brevet:
**20.09.2023 Bulletin 2023/38**

(21) Numéro de dépôt: **21154245.1**

(22) Date de dépôt: **29.01.2021**

(51) Classification Internationale des Brevets (IPC):
**F03D 7/04** (2006.01)    **F03D 17/00** (2016.01)

(52) Classification Coopérative des Brevets (CPC):
**F03D 7/045; F03D 17/00;** F05B 2260/84;
F05B 2270/327; F05B 2270/328; F05B 2270/335;
Y02E 10/72

(54) **PROCÉDÉ DE DÉTERMINATION DE LA VITESSE DU VENT DANS LE PLAN DU ROTOR D'UNE ÉOLIENNE**

VERFAHREN ZUR BESTIMMUNG DER WINDGESCHWINDIGKEIT IN DER ROTOREBENE EINER WINDKRAFTANLAGE

METHOD FOR DETERMINING THE WIND SPEED IN THE ROTOR PLANE OF A WIND TURBINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.02.2020 FR 2001276**

(43) Date de publication de la demande:
**11.08.2021 Bulletin 2021/32**

(73) Titulaire: **IFP Energies nouvelles**
**92500 Rueil-Malmaison (FR)**

(72) Inventeurs:
• **GUILLEMIN, Fabrice**
**92852 RUEIL-MALMAISON CEDEX (FR)**
• **NGUYEN, Hoai-Nam**
**92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**CA-A1- 3 053 618    US-A1- 2006 033 338**

• **JULIER S J ET AL: "Unscented Filtering and Nonlinear Estimation", PROCEEDINGS OF THE IEEE, IEEE. NEW YORK, US, vol. 92, no. 3, 1 mars 2004 (2004-03-01), pages 401-422, XP011108672, ISSN: 0018-9219, DOI: 10.1109/JPROC.2003.823141**
• **HERNANDEZ JORDI ET AL: "Wind speed estimation in wind turbines using EKF: Application to experimental data", 2014 UKACC INTERNATIONAL CONFERENCE ON CONTROL (CONTROL), IEEE, 9 juillet 2014 (2014-07-09), pages 474-479, XP032654543, DOI: 10.1109/CONTROL.2014.6915186**
• **P. Towers ET AL: "Real-time wind field reconstruction from LiDAR measurements using a dynamic wind model and state estimation : LiDAR wind field estimation", Wind Energy, vol. 19, no. 1, 21 November 2014 (2014-11-21), pages 133-150, XP055451329, GB ISSN: 1095-4244, DOI: 10.1002/we.1824**

EP 3 862 560 B1

## Description

### Domaine technique

La présente invention concerne le domaine des énergies renouvelables et concerne plus particulièrement la mesure de la ressource des éoliennes, le vent, dans des objectifs de prédiction du vent, de contrôle (orientation, régulation de couple et de vitesse) et/ou de diagnostic et/ou de surveillance de l'éolienne.

Une éolienne permet de transformer l'énergie cinétique du vent en énergie électrique ou mécanique. Pour la conversion du vent, elle se compose des éléments suivants :

- un mât permettant de placer un rotor à une hauteur suffisante pour permettre son mouvement (nécessaire pour les éoliennes à axe horizontal) ou de placer ce rotor à une hauteur lui permettant d'être entraîné par un vent plus fort et régulier qu'au niveau du sol. Le mât abrite généralement une partie des composants électriques et électroniques (modulateur, commande, multiplicateur, générateur, ...) ;

- une nacelle montée au sommet du mât, abritant des composants mécaniques, pneumatiques, certains composants électriques et électroniques, nécessaires au fonctionnement de l'éolienne. La nacelle peut tourner pour orienter le rotor dans la bonne direction ;

- un rotor, fixé à la nacelle, comprenant plusieurs pales (en général trois) et le nez de l'éolienne. Le rotor est entraîné par l'énergie du vent, il est relié par un arbre mécanique directement ou indirectement (via un système de boîte de vitesse et d'arbre mécanique) à une machine électrique (générateur électrique), ou tout autre type de machine de conversion, qui convertit l'énergie recueillie en énergie électrique ou tout type d'énergie. Le rotor est potentiellement doté de systèmes de contrôle tels que des pales à angle variable ou des freins aérodynamiques ;

- une transmission, composée de deux axes (arbre mécanique du rotor et arbre mécanique de la machine de conversion) reliés par une transmission (boite de vitesse) formant ainsi une chaîne cinématique entre l'arbre mécanique du rotor et l'arbre mécanique de la machine de conversion.

Depuis le début des années 1990, l'énergie éolienne a connu un regain d'intérêt, en particulier dans l'Union Européenne où le taux de croissance annuel est d'environ 20 %. Cette croissance est attribuée à la possibilité inhérente de production d'électricité sans émissions de carbone. Afin de soutenir cette croissance, le rendement des éoliennes doit continuer à être amélioré. La perspective d'augmentation de production d'énergie éolienne nécessite le développement d'outils de production efficaces, et d'outils de contrôle avancé pour améliorer les performances des machines. Les éoliennes sont conçues pour produire de l'électricité à un prix aussi bas que possible. Par conséquent, les éoliennes sont en général construites de manière à atteindre leur performance maximale pour une vitesse du vent d'environ 15 m/s. Il n'est pas nécessaire de concevoir des éoliennes qui maximalisent leur rendement à des vitesses de vent plus élevées, celles-ci étant peu fréquentes. En cas de vitesses de vent supérieures à 15 m/s, il est nécessaire de perdre une partie de l'énergie supplémentaire contenue dans le vent afin d'éviter tout endommagement de l'éolienne. Toutes les éoliennes sont donc conçues avec un système de régulation de la puissance.

Pour cette régulation de la puissance, des contrôleurs sont conçus pour des aérogénérateurs à vitesse variable. Les objectifs des contrôleurs sont de maximiser la puissance électrique récupérée, de minimiser les fluctuations de vitesse du rotor et de minimiser la fatigue et les moments extrêmes de la structure (pales, mât et plate-forme).

### Technique antérieure

Pour optimiser le contrôle, il est important de connaître la vitesse du vent au niveau du rotor de l'éolienne. Pour cela, différentes techniques ont été mises au point.

Selon une première technique, l'utilisation d'un anémomètre permet d'estimer une vitesse du vent en un point, mais cette technologie imprécise ne permet pas de mesurer l'ensemble d'un champ de vent ou de connaître les composantes tridimensionnelles de la vitesse du vent.

Selon une deuxième technique, on peut utiliser un capteur LIDAR (acronyme de l'expression en langue anglaise « light détection and ranging » pouvant être traduite par télédétection par Laser). Le LIDAR est une technologie de télédétection ou de mesure optique basée sur l'analyse des propriétés d'un faisceau renvoyé vers son émetteur. Cette méthode est utilisée notamment pour déterminer la distance à un objet au moyen d'un laser à impulsions. À la différence du radar basé sur un principe similaire, le capteur LIDAR utilise de la lumière visible ou infrarouge au lieu d'ondes radio. La distance à un objet ou à une surface est donnée par la mesure du délai entre l'impulsion et la détection du signal réfléchi.

Dans le domaine des éoliennes, le capteur LIDAR est annoncé comme étant un capteur indispensable au bon fonctionnement des grandes éoliennes, tout particulièrement alors que leur taille et leur puissance augmente (aujourd'hui, 5 MW, bientôt 12 MW en offshore). Ce capteur permet la mesure à distance du vent, permettant dans un premier temps de calibrer les éoliennes pour qu'elles puissent fournir une puissance maximum (optimisation de la courbe de puissance). Pour cette étape de calibration, le capteur peut être positionné au sol et orienté verticalement (profiler), ce qui permet de mesurer la vitesse de vent et sa direction, ainsi que le gradient de vent selon les altitudes. Cette application est tout particulièrement critique puisqu'elle permet de connaître la ressource productrice d'énergie. Ceci est important pour les projets éoliens, puisque cela conditionne la fiabilité financière du projet. Une seconde application est le placement de ce capteur sur la nacelle de l'éolienne, pour mesurer le champ de vent en avant de l'éolienne en étant orienté quasiment horizontalement. A priori, la mesure du champ de vent à l'avant de l'éolienne permet de connaître à l'avance la turbulence que va rencontrer l'éolienne quelques instants plus tard. Toutefois, les techniques actuelles de contrôle et de surveillance d'une éolienne ne permettent pas de prendre en compte une mesure réalisée par un capteur LIDAR en estimant précisément la vitesse du vent au niveau du rotor, c'est-à-dire dans le plan du rotor. Une telle application est décrite notamment dans la demande de brevet FR 3013777 (US 2015145253).

Toutefois, le capteur LIDAR est un capteur onéreux. De plus, le développement d'un tel capteur LIDAR étant relativement récent, il est encore difficile de savoir en transformant les mesures brutes du capteur LIDAR, comment exploiter les caractéristiques du champ de vent telles que la vitesse du vent, la direction du vent, le cisaillement du vent, la turbulence, le facteur d'induction, etc. Un tel capteur LIDAR nécessite donc une mise en oeuvre complexe pour déterminer la vitesse du vent dans le plan du rotor. C'est pourquoi, il existe un besoin de déterminer la vitesse du vent dans le plan du rotor de manière peu onéreuse, de manière fiable, et directement exploitable, par exemple pour le contrôle et/ou le diagnostic de l'éolienne.

CA3 053 618 A1 décrit une méthode de définition d'une puissance disponible d'un parc éolien, et notamment la détermination de vitesses du vent de différentes éoliennes dans le plan de leur rotor.

**Résumé de l'invention**

La présente invention a pour but de déterminer, en temps réel, de manière peu onéreuse et de manière fiable, la vitesse du vent dans le plan du rotor. Dans ce but, la présente invention concerne un procédé de détermination de la vitesse du vent dans le plan d'un rotor d'une éolienne, au moyen de mesures de la vitesse de rotation du rotor, de l'angle des pales et de la puissance générée. Le procédé selon l'invention met en oeuvre un modèle dynamique de l'éolienne, un modèle dynamique du vent et un filtre de Kalman sans parfum. Les modèles dynamiques permettent une détermination fiable de la vitesse du vent dans le plan du rotor.

Le filtre de Kalman sans parfum permet une détermination sans divergence des résultats. De plus, le procédé selon l'invention n'utilise aucun capteur onéreux.

L'invention concerne un procédé de détermination de la vitesse du vent dans le plan d'un rotor d'une éolienne, pour ce procédé, on met en oeuvre les étapes suivantes :

a) On mesure la vitesse de rotation dudit rotor de ladite éolienne, l'angle d'inclinaison des pales de ladite éolienne, et la puissance générée par une machine de conversion de ladite éolienne ;
b) On construit un modèle dynamique de ladite éolienne qui relie la vitesse de rotation dudit rotor de ladite éolienne à ladite vitesse du vent dans ledit plan du rotor, audit angle d'inclinaison desdites pales de ladite éolienne et à ladite puissance générée par ladite machine de conversion de ladite éolienne ;
c) On construit un modèle dynamique du vent au moyen d'un modèle de marche aléatoire du second ordre ; et
d) On détermine ladite vitesse du vent sur ledit plan dudit rotor au moyen d'un filtre de Kalman sans parfum appliqué audit modèle dynamique de ladite éolienne, audit modèle dynamique du vent, et à partir desdites mesures de ladite vitesse de rotation dudit rotor, dudit angle d'inclinaison desdites pales de l'éolienne, et de ladite puissance générée par ladite machine de conversion de l'éolienne.

Selon un mode de réalisation, ledit modèle dynamique du vent s'écrit

$$\begin{cases} \begin{bmatrix} \frac{dv_1(t)}{dt} \\ \frac{dv_2(t)}{dt} \end{bmatrix} = \begin{bmatrix} 0 & 1 \\ 0 & 0 \end{bmatrix} \begin{bmatrix} v_1(t) \\ v_2(t) \end{bmatrix} + \begin{bmatrix} 0 \\ \eta(t) \end{bmatrix} \\ v(t) = \begin{bmatrix} 1 & 0 \end{bmatrix} \begin{bmatrix} v_1(t) \\ v_2(t) \end{bmatrix} \end{cases}$$

avec $v_1(t)$ la vitesse du vent dans le plan du rotor, $v_2(t)$ la dérivée de la vitesse du vent dans le plan du rotor, $\eta(t)$ un bruit blanc de moyenne zéro et $v(t) = v1 (t)$.

Avantageusement, ledit modèle dynamique de ladite éolienne s'écrit :

$$\frac{d\omega(t)}{dt} = \frac{1}{2J}\pi\rho R^3 C_q(\beta(t), \lambda(t))v(t)^2 - \frac{P_g(t)}{J\omega(t)} - \frac{1}{J}T_l(t)$$

avec $w(t)$ la vitesse de rotation dudit rotor, $J$ est le moment d'inertie de la chaîne cinématique de ladite éolienne, $\rho$ est la densité de l'air, $R$ est le rayon dudit rotor, $C_q$ est le coefficient de puissance, $\beta(t)$ est ledit angle d'inclinaison desdites pales, $\lambda(t)$ est le rapport de la vitesse en bout de pale sur ladite vitesse du vent dans ledit plan du rotor, $P_g(t)$ ladite puissance générée par ladite machine de conversion de ladite éolienne, $v(t)$ ladite vitesse du vent dans ledit plan du rotor et $T_l(t)$ le couple de perte le long de ladite chaîne cinématique de ladite éolienne. De préférence, ledit couple de perte $T_l(t)$ est considéré comme un bruit.

De manière avantageuse, ledit coefficient de puissance $C_q$ est obtenu au moyen d'une cartographie de ladite éolienne.

Selon un aspect, ledit procédé détermine la composante longitudinale de la vitesse de vent moyenne sur ledit plan du rotor.

Conformément à une mise en oeuvre, on applique ledit filtre de Kalman sans parfum à l'équation d'état :

$$\begin{cases} \begin{bmatrix} \frac{dx_1(t)}{dt} \\ \frac{dx_2(t)}{dt} \\ \frac{dx_3(t)}{dt} \end{bmatrix} = \begin{bmatrix} \frac{1}{2J}\pi\rho R^3 C_q\left(\beta(t), \frac{Rx_1(t)}{x_2(t)}\right)x_2(t)^2 - \frac{P_g(t)}{Jx_1(t)} \\ x_3(t) \\ 0 \end{bmatrix} + \begin{bmatrix} \mu_1(t) \\ 0 \\ \mu_2(t) \end{bmatrix} \\ y(t) = \begin{bmatrix} 1 & 0 & 0 \end{bmatrix} \begin{bmatrix} x_1(t) \\ x_2(t) \\ x_3(t) \end{bmatrix} + \xi(t) \end{cases}$$

avec $x_1(t) = \omega(t)$, $x_2(t) = v(t)$, $x_3(t) = \frac{dv(t)}{dt}$ , $\omega(t)$ la vitesse de rotation dudit rotor, $J$ est le moment d'inertie de la chaîne cinématique de ladite éolienne, $\rho$ est la densité de l'air, $R$ est le rayon dudit rotor, $C_q$ est le coefficient de puissance, $\beta(t)$ est ledit angle d'inclinaison desdites pales, $P_g(t)$ ladite puissance générée par ladite machine de conversion de ladite éolienne, $v(t)$ ladite vitesse du vent dans ledit plan du rotor, $\mu_1(t)$ et $\mu_2(t)$ sont des bruits blancs indépendants de moyenne zéro, $y(t)$ la sortie mesurée s'identifiant à ladite vitesse du rotor $w(t)$ corrompue par un bruit blanc $\varsigma(t)$.

Selon un mode de réalisation, on détermine ladite vitesse du vent au moyen des étapes suivantes :

i) on initialise k=0, le vecteur d'état $\hat{x}_a(0|0) = m(0)$ et un état de la matrice de covariance $P(0|0) = P_0$;
ii) à chaque instant k différent de 0, on acquiert lesdites mesures y(k) ; et
iii) à chaque instant k différent de 0, on détermine la vitesse du vent v(k) dans le plan du rotor moyen des équations suivantes :

$$K(k) = P(k|k-1)C^T(CP(k|k-1)C^T + R)^{-1}$$

$$\begin{cases} x(k|k) &= x(k|k-1) + K(k)(y(k) - Cx(k|k-1)) \\ P(k|k) &= (\mathbf{I}_3 - K(k)C)P(k|k-1) \end{cases}$$

$$v(k) = \begin{bmatrix} 0 & 1 & 0 \end{bmatrix}\hat{x}$$

avec K le gain du filtre de Kalman, P la covariance d'un bruit gaussien $\mu$, P(k|k-1) la variance d'erreur à partir des mesures dudit instant k-1, P(k|k) la variance d'erreur à partir des mesures dudit instant k, x(k|k) l'estimation de x(k) à partir des mesures du temps k, x(k|k-1) l'estimation de x(k) à partir des mesures du temps k-1, R la covariance d'un bruit gaussien $\xi$, C = [1 0 0], I₃ la matrice d'identité de dimension 3.

L'invention concerne également un procédé de contrôle d'une éolienne. Pour ce procédé, on met en oeuvre les étapes suivantes :

a) on détermine ladite vitesse du vent dans ledit plan de rotor de l'éolienne au moyen du procédé selon l'une des caractéristiques précédentes ;

b) on contrôle ladite éolienne en fonction de ladite vitesse du vent dans ledit plan du rotor de ladite éolienne.

De plus, l'invention concerne un produit programme d'ordinateur comprenant des instructions de code agencés pour mettre en oeuvre les étapes d'un procédé selon l'une des caractéristiques précédentes, lorsque le programme est exécuté sur une unité de contrôle et/ou de diagnostic de ladite éolienne.

En outre, l'invention concerne une éolienne comportant des moyens de mesure de la vitesse de rotation dudit rotor, des moyens de mesure de l'angle d'inclinaison des pales de l'éolienne, des moyens de mesure de la puissance générée par la machine de conversion de ladite éolienne, et des moyens de détermination de la vitesse du vent dans le plan du rotor de l'éolienne aptes à mettre en oeuvre le procédé selon l'une des caractéristiques précédentes.

Selon un mode de réalisation de l'invention, l'éolienne comporte un système de contrôle et d'acquisition de données en temps réel qui comprend lesdits moyens de mesure de la vitesse de rotation dudit rotor, lesdits moyens de mesure de l'angle d'inclinaison des pales de l'éolienne, et lesdits moyens de mesure de la puissance générée par la machine de conversion de ladite éolienne.

D'autres caractéristiques et avantages du procédé selon l'invention, apparaîtront à la lecture de la description ci-après d'exemples non limitatifs de réalisations, en se référant aux figures annexées et décrites ci-après.

**Liste des figures**

La figure 1 illustre une éolienne selon un mode de réalisation de l'invention.

La figure 2 illustre les étapes du procédé selon un mode de réalisation de l'invention.

La figure 3 illustre un exemple de cartographie du coefficient de puissance $C_q$.

La figure 4 illustre une courbe de puissance générée par une machine de conversion (électrique) en fonction du temps mesurée pour un exemple d'application.

La figure 5 illustre une courbe de la vitesse de rotation du rotor en fonction du temps mesurée pour l'exemple de la figure 4.

La figure 6 illustre une courbe de l'angle d'inclinaison des pales en fonction du temps mesuré pour l'exemple des figures 4 et 5.

La figure 7 illustre des courbes de la vitesse du vent dans le plan du rotor en fonction du temps, obtenues par le procédé selon un mode de réalisation de l'invention et au moyen d'un capteur LIDAR, pour l'exemple des figures 4 à 6.

**Description des modes de réalisation**

La présente invention concerne un procédé de détermination en temps réel de la vitesse du vent dans le plan du rotor d'une éolienne.

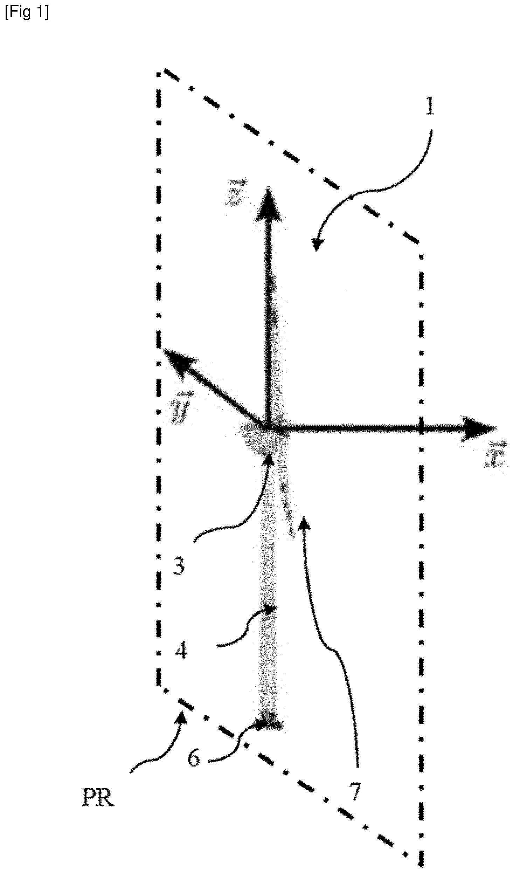

La figure 1 représente, de manière schématique et non limitative, une éolienne 1 à axe horizontal pour le procédé selon un mode de réalisation de l'invention. Classiquement, une éolienne 1 permet de transformer l'énergie cinétique du vent en énergie électrique ou mécanique. Pour la conversion du vent, elle se compose des éléments suivants :

- un mât 4 permettant de placer un rotor (non représenté) à une hauteur suffisante pour permettre son mouvement (nécessaire pour les éoliennes à axe horizontal) ou de placer ce rotor à une hauteur lui permettant d'être entraîné par un vent plus fort et régulier qu'au niveau du sol 6. Le mât 4 abrite généralement une partie des composants électriques et électroniques (modulateur, commande, multiplicateur, générateur, ...) ;
- une nacelle 3 montée au sommet du mât 4, abritant des composants mécaniques, pneumatiques, certains composants électriques et électroniques (non représentés), nécessaires au fonctionnement de la machine de conversion. La nacelle 3 peut tourner pour orienter le rotor dans la bonne direction ;
- le rotor, fixé à la nacelle, comprenant plusieurs pales 7 (en général trois) et le nez de l'éolienne. Le rotor est entraîné par l'énergie du vent, il est relié par un arbre mécanique directement ou indirectement (via un système de boîte de vitesse et d'arbre mécanique) à une machine électrique (générateur électrique...) ou toute autre machine de conversion (par exemple machine hydraulique ou pneumatique) qui convertit l'énergie recueillie en énergie électrique ou toute autre énergie (par exemple hydraulique ou pneumatique). Le rotor est potentiellement doté de systèmes de contrôle tels que des pales à angle variable ou des freins aérodynamiques ;
- une transmission (non représentée), composée de deux axes (arbre mécanique du rotor et arbre mécanique de la machine de conversion) reliés, formant ainsi une chaîne cinématique entre l'arbre mécanique du rotor et l'arbre mécanique de la machine de conversion.

Sur cette figure, sont représentés également les axes x, y et z. Le point de référence de ce repère est le centre du rotor. La direction x est la direction longitudinale, correspondant à la direction de l'axe du rotor, en amont de l'éolienne. La direction y, perpendiculaire à la direction x, est la direction latérale située dans un plan horizontal (les directions x, y forment un plan horizontal). La direction z est la direction verticale (correspondant sensiblement à la direction du mât 4) dirigée vers le haut, l'axe z est perpendiculaire aux axes x et y. Le plan du rotor est indiqué par le rectangle en traits pointillés PR, il est défini par les directions y, z pour une valeur de x nulle.

Selon l'invention, le procédé de détermination de la vitesse du vent comporte les étapes suivantes :

1) Mesures
2) Construction du modèle dynamique de l'éolienne
3) Construction du modèle dynamique du vent
4) Détermination de la vitesse du vent

Les étapes 1) et 4) peuvent être mises en oeuvre en temps réel. Les étapes 2) et 3) peuvent être mises en oeuvre préalablement hors ligne. Ces étapes sont détaillées dans la suite de la description.

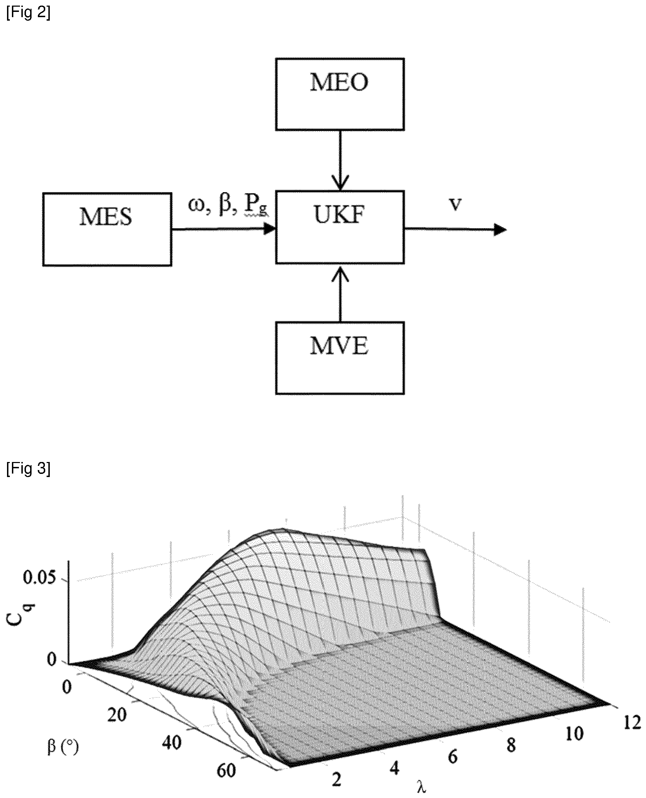

La figure 2 illustre, schématiquement et de manière non limitative, les étapes du procédé de détermination de la vitesse du vent selon un mode de réalisation de l'invention. Préalablement, on peut construire un modèle dynamique de l'éolienne MEO, qui relie la vitesse de rotation du rotor à la vitesse du vent dans le plan du rotor, à l'angle d'inclinaison des pales et à la puissance générée par la machine de conversion. De plus, on peut construire préalablement un modèle dynamique du vent MVE. Le procédé met également en oeuvre une étape de mesure MES de la vitesse de rotation du rotor w, de l'angle d'inclinaison des pales $\beta$ et de la puissance générée $P_g$ par la machine de conversion. Ensuite, on met en oeuvre un filtre de Kalman sans parfum UKF appliqué au modèle dynamique de l'éolienne MEO, au modèle dynamique du vent MVE et aux mesures $\omega$, $\beta$, $P_g$. Le filtre de Kalman sans parfum permet de déterminer la vitesse du vent dans le plan du rotor v.

1- Mesures

Lors de cette étape, on mesure :

- La vitesse de rotation du rotor,
- L'angle d'inclinaison des pales, et
- La puissance générée par la machine de conversion (en d'autres termes la puissance générée par l'éolienne).

Selon un mode de réalisation de l'invention, au moins une des mesures peut être obtenue à partir d'un système de contrôle et d'acquisition de données en temps réel (SCADA). Un système de contrôle et d'acquisition de données en temps réel (SCADA) (de l'anglais : « Supervisory Control And Data Acquisition ») est un système de télégestion à grande échelle permettant de traiter en temps réel un grand nombre de télémesures et de contrôler à distance des installations techniques. C'est une technologie industrielle dans le domaine de l'instrumentation, dont les implémentations peuvent être considérées comme des structures d'instrumentation incluant une couche de type intergiciel (de l'anglais « middleware »). De préférence, toutes les mesures peuvent être obtenues à partir du système SCADA, ce qui facilite la mise en oeuvre du procédé sans instrumentation particulière. En outre, le système SCADA peut permettre de prendre en compte au moins une autre mesure pour rendre la détermination de la vitesse du vent dans le plan du rotor plus précise. Il peut s'agir notamment de températures, de données électriques, de vibrations, etc. Les températures peuvent informer sur les pertes mécaniques effectives, et permettent ainsi d'affiner la modélisation de l'éolienne. L'accélérométrie, associée à une compréhension modale et vibratoire suffisamment fine et fidèle de la structure, peut permettre de remonter à une estimation de l'état du vent et des turbulences impactant l'éolienne.

Alternativement, au moins une des mesures peut être obtenue par un capteur dédié. Pour cette réalisation :

- pour la mesure de la vitesse de rotation du rotor, on peut utiliser un capteur de rotation angulaire du rotor, et/ou
- pour la mesure de l'angle d'inclinaison des pales, on peut utiliser un capteur angulaire des pales, et/ou
- pour la mesure de la puissance générée par la machine de conversion, on peut utiliser un capteur de tension connue et contrôlée, et un capteur d'intensité pour la mesure du courant débité par la génératrice.

2 - Construction du modèle dynamique de l'éolienne

Lors de cette étape, on construit un modèle dynamique de l'éolienne qui relie la vitesse de rotation du rotor à la vitesse du vent dans le plan du rotor, à l'angle d'inclinaison des pales de l'éolienne et à la puissance générée par la machine de conversion de l'éolienne. On appelle modèle dynamique de l'éolienne, un modèle obtenu par l'application du principe fondamental de la dynamique appliqué à l'éolienne.

Selon un mode de réalisation de l'invention, le modèle dynamique de l'éolienne peut s'écrire :

$$\frac{d\omega(t)}{dt} = \frac{1}{2J}\pi\rho R^3 C_q(\beta(t), \lambda(t))v(t)^2 - \frac{P_g(t)}{J\omega(t)} - \frac{1}{J}T_l(t)$$

avec w(t) la vitesse de rotation du rotor, J est le moment d'inertie de la chaîne cinématique de l'éolienne, ρ est la densité de l'air, R est le rayon du rotor, $C_q$ est le coefficient de puissance, β(t) est ledit angle d'inclinaison des pales, λ(t) est le rapport de la vitesse en bout de pale sur la vitesse du vent dans le plan du rotor (c'est-à-dire $\lambda(t) = \frac{R\omega(t)}{v(t)}$ ), $P_g$(t) la puissance générée par la machine de conversion de l'éolienne, v(t) ladite vitesse du vent dans le plan du rotor et $T_l$(t) le couple de perte le long de la chaîne cinématique de l'éolienne.

De préférence, pour ce mode de réalisation, le couple de perte $T_l$(t) peut être considéré comme un bruit. Ainsi, la détermination de la vitesse du vent dans le plan du rotor est simplifiée. Alternativement, le couple de perte $T_l$(t) peut être mesuré.

Conformément à une mise en oeuvre de ce mode de réalisation, le coefficient de puissance $C_q$ peut être obtenu au moyen d'une cartographie de l'éolienne. Une telle cartographie relie le coefficient de puissance $C_q$ à l'angle d'inclinaison des pales β et au rapport de vitesse en bout de pale sur ladite vitesse du vent dans ledit plan du rotor λ. Selon un exemple non limitatif, la cartographie peut être construite préalablement en utilisant un modèle aérodynamique de l'éolienne considérée. La figure 3 illustre, schématiquement et de manière non limitative, un exemple d'une telle cartographie qui relie le coefficient de puissance $C_q$ en fonction de l'angle d'inclinaison des pales β (en degrés) et du rapport λ de la vitesse en bout de pale sur ladite vitesse du vent dans ledit plan du rotor.

En effet, le modèle dynamique de l'éolienne selon ce mode de réalisation peut être obtenu à partir de l'équation du principe fondamental de la dynamique :

$$J\frac{d\omega(t)}{dt} = T_r(t) - T_g(t) - T_l(t)$$

avec w(t) la vitesse de rotation dudit rotor, J est le moment d'inertie de la chaîne cinématique de l'éolienne, Tr(t) est le couple aérodynamique produit par le rotor, Tg(t) est le couple généré par la machine de conversion, Tl(t) le couple de perte le long de la chaîne cinématique de l'éolienne.

Dans cette équation, le couple aérodynamique peut s'écrire :

$$T_r(t) = \frac{1}{2}\pi\rho R^3 C_q(\beta(t), \lambda(t))v(t)^2$$

avec $\rho$ est la densité de l'air, R est le rayon du rotor, $C_q$ est le coefficient de puissance, $\beta(t)$ est l'angle d'inclinaison des pales, $\lambda(t)$ est le rapport de la vitesse en bout de pale sur la vitesse du vent dans ledit plan du rotor (c'est-à-dire $\lambda(t) = \frac{R\omega(t)}{v(t)}$ ) et v(t) est ladite vitesse du vent dans le plan du rotor.

De plus, le couple généré par la machine de conversion Tg peut s'écrire

$$T_g(t) = \frac{P_g(t)}{\omega(t)}$$

avec w(t) la vitesse de rotation du rotor et $P_g(t)$ la puissance générée par la machine de conversion de l'éolienne.

La combinaison de ces équations permet d'aboutir au modèle dynamique de l'éolienne décrit ci-dessus.

Le procédé selon l'invention n'est pas limité à ce modèle dynamique de l'éolienne, et peut être mis en oeuvre pour tout autre modèle dynamique de l'éolienne.

3 - Construction du modèle du vent

Lors de cette étape, on construit un modèle dynamique du vent au moyen d'un modèle de marche aléatoire du second ordre. Un modèle dynamique du vent est un modèle qui représente l'évolution du vent en fonction du temps. Un modèle de marche aléatoire est un modèle possédant une dynamique discrète composée d'une succession de pas de temps aléatoires. Pour un tel modèle, le futur du système dépend de son état présent mais pas de son passé. L'utilisation d'un modèle de marche aléatoire permet une bonne modélisation du vent, et un tel modèle est approprié pour représenter des courbes lisses avec une dérivée seconde au carré. Un tel modèle ne nécessite pas la connaissance préalable de caractéristiques du vent telles que la vitesse moyenne, la turbulence, etc.

Selon un mode de réalisation de l'invention, le modèle dynamique de vent peut s'écrire :

$$\begin{cases} \begin{bmatrix} \frac{dv_1(t)}{dt} \\ \frac{dv_2(t)}{dt} \end{bmatrix} = \begin{bmatrix} 0 & 1 \\ 0 & 0 \end{bmatrix}\begin{bmatrix} v_1(t) \\ v_2(t) \end{bmatrix} + \begin{bmatrix} 0 \\ \eta(t) \end{bmatrix} \\ v(t) = \begin{bmatrix} 1 & 0 \end{bmatrix}\begin{bmatrix} v_1(t) \\ v_2(t) \end{bmatrix} \end{cases}$$

avec $v_1(t)$ la vitesse du vent dans le plan du rotor, $v_2(t)$ la dérivée de la vitesse du vent dans le plan du rotor, $\eta(t)$ un

bruit blanc de moyenne zéro.

4 - Détermination de la vitesse du vent

Lors de cette étape, on détermine la vitesse du vent sur le plan du rotor de l'éolienne au moyen d'un filtre de Kalman sans parfum (noté UKF de l'anglais « Unscented Kalman Filter »). Le filtre de Kalman sans parfum est appliqué au modèle dynamique de l'éolienne construit à l'étape 2) et au modèle dynamique du vent construit à l'étape 3) et prend en compte les mesures réalisées à l'étape 1). Le filtre de Kalman sans parfum est un algorithme de filtrage qui utilise un modèle de système pour estimer l'état caché actuel d'un système, puis corrige l'estimation à l'aide des mesures disponibles. La philosophie de l'UKF diffère du filtre de Kalman étendu en ce sens qu'elle utilise la transformation sans parfum pour approcher directement la moyenne et la covariance de la distribution cible. Le filtre de Kalman sans parfum peut comporter les étapes de prédiction d'état et de correction des mesures, ces deux étapes étant précédées d'une étape préalable pour le calcul des « points sigma ». Les points sigma sont un ensemble d'échantillons calculés de manière à pouvoir propager de manière exacte les informations de moyenne et de variance dans l'espace d'une fonction non linéaire.

Ainsi, un tel filtre est bien adapté pour déterminer rapidement la vitesse du vent dans le plan du rotor.

Selon un mode de réalisation de l'invention, lors de cette étape on peut déterminer la composante longitudinale de la vitesse de vent moyenne sur le plan du rotor, noté REWS (de l'anglais « Rotor équivalent wind speed »), correspondant à l'état de fonctionnement et de production de l'éolienne à un instant donné. Il s'agit d'une vitesse du vent couramment utilisée pour le contrôle et/ou la surveillance d'une éolienne.

Conformément à une mise en oeuvre de l'invention, on peut appliquer le filtre de Kalman sans parfum à l'équation d'état suivante :

$$
\begin{cases}
\begin{bmatrix} \frac{dx_1(t)}{dt} \\ \frac{dx_2(t)}{dt} \\ \frac{dx_3(t)}{dt} \end{bmatrix} = \begin{bmatrix} \frac{1}{2J}\pi\rho R^3 C_q\left(\beta(t),\frac{Rx_1(t)}{x_2(t)}\right)x_2(t)^2 - \frac{P_g(t)}{Jx_1(t)} \\ x_3(t) \\ 0 \end{bmatrix} + \begin{bmatrix} \mu_1(t) \\ 0 \\ \mu_2(t) \end{bmatrix} \\
y(t) = \begin{bmatrix} 1 & 0 & 0 \end{bmatrix}\begin{bmatrix} x_1(t) \\ x_2(t) \\ x_3(t) \end{bmatrix} + \xi(t)
\end{cases}
$$

avec $x_1(t) = \omega(t)$, $x_2(t) = v(t)$, $x_3(t) = \frac{dv(t)}{dt}$ , $\omega(t)$ la vitesse de rotation du rotor, $J$ est le moment d'inertie de la chaîne cinématique de l'éolienne, $\rho$ est la densité de l'air, $R$ est le rayon du rotor, $C_q$ est le coefficient de puissance, $\beta(t)$ est l'angle d'inclinaison des pales, $P_g(t)$ la puissance générée par la machine de conversion de l'éolienne, $v(t)$ la vitesse du vent dans le plan du rotor, $\mu_1(t)$ et $\mu_2(t)$ sont des bruits blancs indépendants de moyenne zéro, $y(t)$ la sortie mesurée s'identifiant à ladite vitesse du rotor $\omega(t)$ corrompue par un bruit blanc $\varsigma(t)$.

En d'autres termes :

$$y(t) = \omega(t) + \xi(t)$$

En d'autres termes :                                                                                          .

Cette équation d'état peut être obtenue par la combinaison des modèles dynamiques respectivement de l'éolienne et du vent déterminés aux étapes précédentes.

Avec cette équation d'état, le problème d'estimation de la vitesse du vent dans le plan du rotor devient le problème de l'estimation de l'état, c'est-à-dire estimer l'état inconnu $x(t) = [x_1(t)\ x_2(t)\ x_3(t)]^T$ à chaque instant d'échantillonnage à l'aide de cette équation et de la sortie mesurée $y(t)$.

Pour implémenter le filtre de Kalman sans parfum, on peut discrétiser au moyen d'une méthode de discrétisation d'Euler l'équation d'état, on obtient :

$$\begin{cases} x(k) & = f(x(k-1), \beta(k-1), P_g(k-1)) + T_s\mu(k-1) \\ y(k) & = Cx(k) + \xi(k) \end{cases}$$

avec

$$x(k) = \begin{bmatrix} x_1(k) \\ x_2(k) \\ x_3(k) \end{bmatrix}, \ \mu(k) = \begin{bmatrix} \mu_1(k) \\ 0 \\ \mu_2(k) \end{bmatrix}, C = \begin{bmatrix} 1 & 0 & 0 \end{bmatrix},$$

$$f(x(k), \beta(k), P_g(k)) = \begin{bmatrix} x_1(k) + \frac{T_s}{2J}\pi\rho R^3 C_q\left(\beta(k), \frac{Rx_1(k)}{x_2(k)}\right) x_2(k)^2 - \frac{P_g(k)}{Jx_1(k)} \\ x_2(k) + T_s x_3(k) \\ x_3(k) \end{bmatrix}$$

avec $T_s$ est la période d'échantillonnage.

Dans ce modèle d'état discrétisé, on peut supposer que $\mu(t)$ et $\xi(t)$ sont des bruits gaussiens de moyenne nulle et ayant les matrices de covariance respectives Q et R.

On note :

$$x(k|k-1)$$

est l'estimation de x(k) à partir des mesures du temps k-1.

$$x(k|k)$$

est l'estimation de x(k) à partir des mesures du temps k.

$$P(k|k-1)$$

est la variance d'erreur à partir des mesures du temps k-1. P(k|k) est la variance d'erreur à partir des mesures du temps k.

Pour l'estimation d'état donnée x(k - 1|k - 1) et l'estimation de variance d'erreur donnée $P(k$ - 1$|k$ - 1) à l'instant k-1, il y a deux étapes dans l'UKF : la prédiction et la correction.

Après l'étape de correction à l'instant k-1, la distribution de x(k-1) peut être donnée de la manière suivante :

$$x(k-1) \sim \mathcal{N}\left(x(k-1|k-1), P(k-1|k-1)\right)$$

avec $\mathcal{N}$ désignant une distribution gaussienne.

Les points sigma liés à la moyenne $x(k$ - 1$|k$ - 1) et à la matrice de covariance $P(k$ - 1$|k$ - 1) peuvent être calculés de la manière suivante :

$$\begin{cases} \chi_0 & = x(k-1|k-1) \\ \chi_i & = x(k-1|k-1) + \sqrt{n+\lambda}S_i, \ i = \overline{1,n} \\ \chi_{i+n} & = x(k-1|k-1) - \sqrt{n+\lambda}S_i, \ i = \overline{1,n} \end{cases}$$

Dans notre cas n = 3 et Si est la i-ème colonne de S avec

$$SS^T = P(k-1|k-1) .$$

Les points sigma se propagent dans l'équation d'état de la manière suivante : $\gamma_i(k) = f(\chi_i, \beta(k-1), P_g(k-1))$ avec $\Upsilon i$ les réalisations de $x(k|k-1)$ pour tout i variant de 0 à 2n.

La prochaine étape consiste à calculer la moyenne prédite $x(k|k-1)$ et la covariance prédite $P(k|k-1)$ au moyen de :

$$\begin{cases} x(k|k-1) = \sum_{i=0}^{2n} W_i^m \gamma_i, \\ P(k|k-1) = \sum_{i=0}^{2n} W_i^c (\gamma_i - x(k|k-1))(\gamma_i - x(k|k-1))^T + T_s^2 Q \end{cases}$$

Etant donné que l'équation de sortie est linéaire, l'étape de correction est similaire à celle d'un filtre de Kalman linéaire. Le gain du filtre de Kalman peut être calculé de la manière suivante :

$$K(k) = P(k|k-1)C^T (CP(k|k-1)C^T + R)^{-1} .$$

Ensuite, l'estimation de l'état $x(k|k)$ et l'estimation de la covariance $P(k|k)$ à l'instant k peuvent être calculées par :

$$\begin{cases} x(k|k) & = x(k|k-1) + K(k)(y(k) - Cx(k|k-1)) \\ P(k|k) & = (\mathbf{I}_3 - K(k)C)P(k|k-1) \end{cases}$$

avec $I_3$ la matrice d'identité de dimension 3.

Une fois que l'estimation d'état $\hat{x} = x(k|k)$ est déterminée, la vitesse du vent dans le plan du rotor peut être calculée en mettant en oeuvre : $\upsilon(k) = [0\ 1\ 0]\hat{x}$.

La présente invention concerne également un procédé de contrôle d'au moins une éolienne. Pour ce procédé, on peut mettre en oeuvre les étapes suivantes :

- on détermine la vitesse du vent dans le plan du rotor de l'éolienne au moyen du procédé de détermination de la vitesse du vent selon l'une quelconque des variantes ou des combinaisons de variantes décrites ci-dessus ; et

- on contrôle l'éolienne en fonction de la vitesse du vent dans le plan du rotor de l'éolienne. La prédiction précise et en temps réel de la vitesse du vent dans le plan du rotor de l'éolienne permet un contrôle adapté de l'éolienne, en termes de minimisation des effets sur la structure de l'éolienne et de maximisation de la puissance récupérée. En effet, au moyen de ce contrôle, on peut adapter les équipements de l'éolienne pour que l'éolienne soit dans la configuration optimale pour ce vent.

Conformément à une mise en oeuvre de l'invention, on peut commander l'angle d'inclinaison des pales et/ou le couple électrique de récupération du générateur de l'éolienne et/ou l'orientation de la nacelle en fonction de la vitesse du vent et de la direction du vent. De préférence, on peut commander l'angle d'inclinaison individuel des pales. D'autres types de dispositif de régulation peuvent être utilisés. Le contrôle d'inclinaison des pales permet d'optimiser la récupération d'énergie en fonction du vent incident sur les pales.

Selon un mode de réalisation de l'invention, l'angle d'inclinaison des pales et/ou le couple électrique de récupération peuvent être déterminés au moyen de cartographies de l'éolienne en fonction de la vitesse du vent au niveau du rotor. Par exemple, on peut appliquer le procédé de contrôle décrit dans la demande de brevet FR 2976630 A1 (US 2012-0321463).

La présente invention concerne également un procédé de surveillance et/ou diagnostic d'au moins une éolienne. Pour ce procédé, on peut mettre en oeuvre les étapes suivantes :

- on détermine la vitesse du vent dans le plan du rotor de l'éolienne au moyen du procédé de détermination de la vitesse du vent selon l'une quelconque des variantes ou des combinaisons de variantes décrites ci-dessus ; et

- on surveille et/ou on diagnostique le fonctionnement de l'éolienne en fonction de la vitesse du vent dans le plan du rotor.

La surveillance et/ou le diagnostic peut par exemple correspondre à la sollicitation mécanique subie par la structure de l'éolienne en fonction de la vitesse du vent dans le plan du rotor de l'éolienne.

De plus, l'invention concerne un produit programme d'ordinateur, qui comprend des instructions de code agencés pour mettre en oeuvre les étapes d'un des procédés précédemment décrits (procédé de détermination de la direction du vent, procédé de contrôle, procédé de diagnostic). Le programme est exécuté sur une unité de contrôle et/ou de diagnostic de l'éolienne.

L'invention concerne également une éolienne, notamment une éolienne offshore (en mer) ou onshore (sur terre). L'éolienne est équipée de moyens de mesure de la rotation du rotor, de moyens de mesure de l'angle d'inclinaison des pales, et de moyens de mesure de la puissance générée par la machine de conversion. En outre, l'éolienne comporte des moyens de détermination de la vitesse du vent dans le plan du rotor aptes à mettre en oeuvre le procédé de détermination du vent selon l'une des variantes ou des combinaisons de variantes décrites ci-dessus. Selon un mode de réalisation, l'éolienne peut être conforme à l'éolienne illustrée en figure 1.

Selon un mode de réalisation de l'invention, l'éolienne peut comporter un système de contrôle et d'acquisition de données en temps réel (SCADA) qui dispose d'au moins un moyen de mesure parmi les moyens de mesure de la rotation du rotor, les moyens de mesure de l'angle d'inclinaison des pales, et les moyens de mesure de la puissance générée par la machine de conversion. De préférence, le système SCADA peut disposer de toutes ces mesures. En outre, le système SCADA peut comporter des moyens de mesure supplémentaires (par exemple températures, mesures électriques, ...) qui peuvent permettre de rendre la détermination de la vitesse du vent dans le plan du rotor plus précise.

Alternativement, l'éolienne peut comporter au moins un capteur pour réaliser au moins une de ces mesures. Il peut donc s'agir :

- pour la mesure de la vitesse de rotation du rotor, d'un capteur de rotation angulaire du rotor, et/ou
- pour la mesure de l'angle d'inclinaison des pales, d'un capteur angulaire des pales, et/ou
- pour la mesure de la puissance générée par la machine de conversion, d'un capteur de tension connue et contrôlée, et un capteur d'intensité pour la mesure du courant débité par la génératrice.

Pour le mode de réalisation du procédé de contrôle, l'éolienne peut comprendre des moyens de contrôle, par exemple le contrôle de l'angle d'inclinaison (pouvant être traduit par angle de tangage) d'au moins une pale de l'éolienne ou le contrôle du couple électrique, pour mettre en oeuvre le procédé de contrôle selon l'invention.

Comme il va de soi, l'invention ne se limite pas aux seules formes de réalisation des procédés décrits ci-dessus à titre d'exemple, elle embrasse au contraire toutes les variantes de réalisation.

## Exemple

Les caractéristiques et avantages du procédé selon l'invention apparaîtront plus clairement à la lecture de l'exemple d'application ci-après.

L'exemple concerne la détermination de la vitesse de vent REWS dans le plan du rotor de l'éolienne (de l'anglais « Rotor equivalent wind speed »), correspondant à l'état de fonctionnement et de production de l'éolienne à un instant donné. L'éolienne est équipée d'un système SCADA qui dispose de mesures de la rotation du rotor, de mesures de la puissance générée par la machine de conversion, ici une machine électrique, et de mesures de l'angle d'inclinaison des pales.

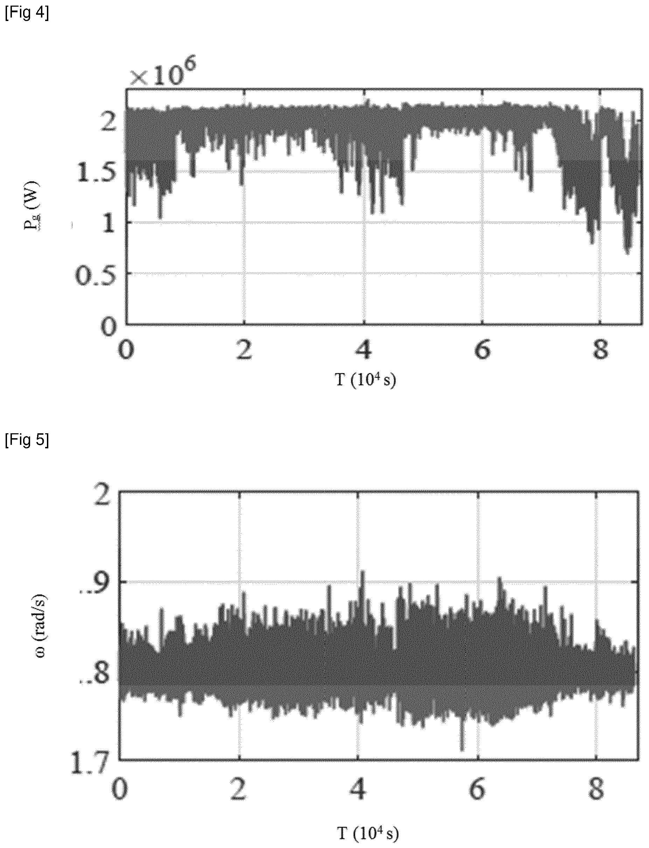

La figure 4 illustre les mesures de la puissance générée Pg en W par la machine de conversion (pour cet exemple, une machine électrique) en fonction du temps T en s.

La figure 5 représente les mesures de la vitesse de rotation du rotor ω en rad/s en fonction du temps T en s.

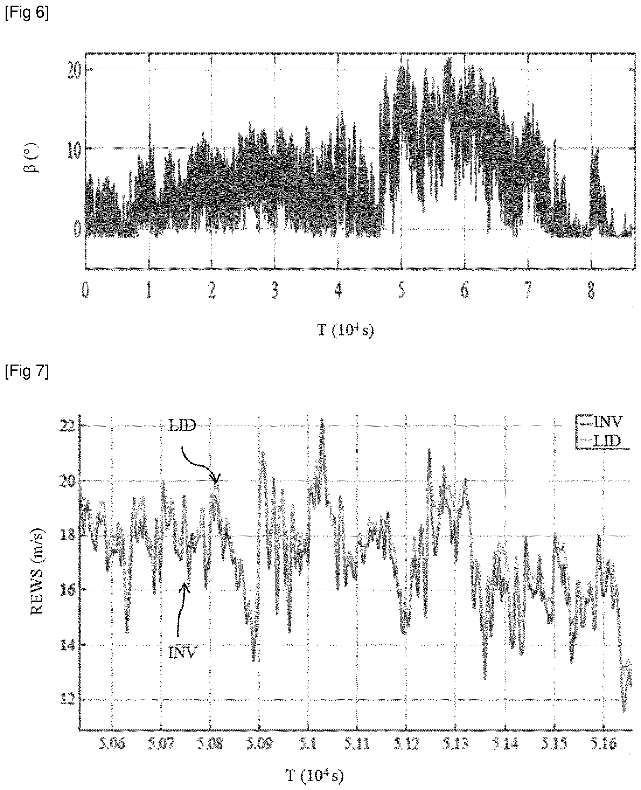

La figure 6 représente les mesures de l'angle d'inclinaison des pales β en degrés en fonction du temps T en s.

En appliquant le procédé selon un mode de réalisation de l'invention, on détermine la vitesse du vent REWS dans le plan du rotor. Cette vitesse déterminée par l'invention est comparée à la vitesse du vent REWS dans le plan du rotor obtenue au moyen d'un capteur LIDAR à quatre faisceaux placés sur la nacelle de l'éolienne.

La figure 7 représente les deux courbes de la vitesse du vent REWS en fonction du temps T en s obtenues par les deux méthodes, selon l'invention notée INV et au moyen d'un capteur LIDAR (cette courbe est notée LID). On remarque que les deux courbes sont quasiment superposées, ce qui traduit que l'invention, bien que n'utilisant aucun capteur onéreux permet de déterminer de manière précise la vitesse du vent dans le plan du rotor de l'éolienne.

## Revendications

1. Procédé de détermination de la vitesse du vent dans le plan d'un rotor (PR) d'une éolienne (1), dans lequel on met en oeuvre les étapes suivantes :

   a) On mesure (MES) la vitesse de rotation dudit rotor de ladite éolienne, l'angle d'inclinaison des pales de ladite éolienne, et la puissance générée par une machine de conversion de ladite éolienne ;
   b) On construit un modèle dynamique de ladite éolienne (MEO) qui relie la vitesse de rotation dudit rotor de ladite éolienne à ladite vitesse du vent dans ledit plan du rotor, audit angle d'inclinaison desdites pales de ladite éolienne et à ladite puissance générée par ladite machine de conversion de ladite éolienne ;
   c) On construit un modèle dynamique du vent (MVE) au moyen d'un modèle de marche aléatoire du second ordre ; et
   d) On détermine ladite vitesse du vent sur ledit plan dudit rotor (PR) au moyen d'un filtre de Kalman sans parfum appliqué audit modèle dynamique de ladite éolienne (MEO), audit modèle dynamique du vent (MVE), et à partir desdites mesures (MES) de ladite vitesse de rotation dudit rotor, dudit angle d'inclinaison desdites pales de l'éolienne, et de ladite puissance générée par ladite machine de conversion de l'éolienne.

2. Procédé de détermination de la vitesse du vent selon la revendication 1, dans lequel ledit modèle dynamique du vent (MVE) s'écrit

$$\begin{cases} \begin{bmatrix} \frac{dv_1(t)}{dt} \\ \frac{dv_2(t)}{dt} \end{bmatrix} = \begin{bmatrix} 0 & 1 \\ 0 & 0 \end{bmatrix} \begin{bmatrix} v_1(t) \\ v_2(t) \end{bmatrix} + \begin{bmatrix} 0 \\ \eta(t) \end{bmatrix} \\ v(t) = \begin{bmatrix} 1 & 0 \end{bmatrix} \begin{bmatrix} v_1(t) \\ v_2(t) \end{bmatrix} \end{cases}$$

avec $v_1(t)$ la vitesse du vent dans le plan du rotor, $v_2(t)$ la dérivée de la vitesse du vent dans le plan du rotor, $\eta(t)$ un bruit blanc de moyenne zéro et $v(t) = v1(t)$.

3. Procédé de détermination de la vitesse du vent selon l'une des revendications précédentes, dans lequel ledit modèle dynamique de ladite éolienne (MEO) s'écrit :

$$\frac{d\omega(t)}{dt} = \frac{1}{2J}\pi\rho R^3 C_q(\beta(t), \lambda(t))v(t)^2 - \frac{P_g(t)}{J\omega(t)} - \frac{1}{J}T_l(t)$$

avec w(t) la vitesse de rotation dudit rotor, J est le moment d'inertie de la chaîne cinématique de ladite éolienne, ρ est la densité de l'air, R est le rayon dudit rotor, $C_q$ est le coefficient de puissance, $\beta(t)$ est ledit angle d'inclinaison desdites pales, $\lambda(t)$ est le rapport de la vitesse en bout de pale sur ladite vitesse du vent dans ledit plan du rotor, $P_g(t)$ ladite puissance générée par ladite machine de conversion de ladite éolienne, v(t) ladite vitesse du vent dans ledit plan du rotor et $T_l(t)$ le couple de perte le long de ladite chaîne cinématique de ladite éolienne.

4. Procédé de détermination de la vitesse du vent selon la revendication 3, dans lequel ledit couple de perte $T_l(t)$ est considéré comme un bruit.

5. Procédé de détermination de la vitesse du vent selon l'une des revendications 3 ou 4, dans lequel ledit coefficient de puissance $C_q$ est obtenu au moyen d'une cartographie de ladite éolienne.

6. Procédé de détermination de la vitesse du vent selon l'une des revendications précédentes, dans lequel ledit procédé détermine la composante longitudinale de la vitesse de vent moyenne sur ledit plan du rotor.

7. Procédé de détermination de la vitesse du vent selon l'une des revendications précédentes, dans lequel on applique ledit filtre de Kalman sans parfum à l'équation d'état :

$$\begin{cases} \begin{bmatrix} \frac{dx_1(t)}{dt} \\ \frac{dx_2(t)}{dt} \\ \frac{dx_3(t)}{dt} \end{bmatrix} = \begin{bmatrix} \frac{1}{2J}\pi\rho R^3 C_q\left(\beta(t), \frac{Rx_1(t)}{x_2(t)}\right)x_2(t)^2 - \frac{P_g(t)}{Jx_1(t)} \\ x_3(t) \\ 0 \end{bmatrix} + \begin{bmatrix} \mu_1(t) \\ 0 \\ \mu_2(t) \end{bmatrix} \\ y(t) \qquad = \begin{bmatrix} 1 & 0 & 0 \end{bmatrix} \begin{bmatrix} x_1(t) \\ x_2(t) \\ x_3(t) \end{bmatrix} + \xi(t) \end{cases}$$

avec $x_1(t) = w(t)$, $x_2(t) = v(t)$, $x_3(t) = \frac{dv(t)}{dt}$ , $\omega(t)$ la vitesse de rotation dudit rotor, J est le moment d'inertie de la chaîne cinématique de ladite éolienne, $\rho$ est la densité de l'air, R est le rayon dudit rotor, $C_q$ est le coefficient de puissance, $\beta(t)$ est ledit angle d'inclinaison desdites pales, $P_g(t)$ ladite puissance générée par ladite machine de conversion de ladite éolienne, v(t) ladite vitesse du vent dans ledit plan du rotor, $\mu_1(t)$ et $\mu_2(t)$ sont des bruits blancs indépendants de moyenne zéro, y(t) la sortie mesurée s'identifiant à ladite vitesse du rotor w(t) corrompue par un bruit blanc $\varsigma(t)$.

8. Procédé de détermination de la vitesse du vent selon l'une des revendications précédentes, dans lequel on détermine ladite vitesse du vent au moyen des étapes suivantes :

i) on initialise k=0, le vecteur d'état $\hat{x}_a(0|0)=m(0)$ et un état de la matrice de covariance $P(0|0) = P_0$;
ii) à chaque instant k différent de 0, on acquiert lesdites mesures y(k) ; et
iii) à chaque instant k différent de 0, on détermine la vitesse du vent v(k) dans le plan du rotor moyen des équations suivantes :

$$K(k) = P(k|k-1)C^T(CP(k|k-1)C^T + R)^{-1}$$

$$\begin{cases} x(k|k) & = x(k|k-1) + K(k)(y(k) - Cx(k|k-1)) \\ P(k|k) & = (\mathbf{I}_3 - K(k)C)P(k|k-1) \end{cases}$$

$$v(k) = \begin{bmatrix} 0 & 1 & 0 \end{bmatrix}\hat{x}$$

avec K le gain du filtre de Kalman, P la covariance d'un bruit gaussien μ, P(k|k-1) la variance d'erreur à partir des mesures dudit instant k-1, P(k|k) la variance d'erreur à partir des mesures dudit instant k, x(k|k) l'estimation de x(k) à partir des mesures du temps k, x(k|k-1) l'estimation de x(k) à partir des mesures du temps k-1, R la covariance d'un bruit gaussien $\xi$, C = [1 0 1], $I_3$ la matrice d'identité de dimension 3.

**9.** Procédé de contrôle d'une éolienne (1), **caractérisé en ce qu'**on met en oeuvre les étapes suivantes :

    a) on détermine la vitesse du vent dans le plan de rotor (PR) de l'éolienne (1) au moyen du procédé selon l'une des revendications précédentes ;
    b) on contrôle ladite éolienne (1) en fonction de ladite vitesse du vent dans ledit plan du rotor de ladite éolienne (1).

**10.** Produit programme d'ordinateur comprenant des instructions de code agencées pour mettre en oeuvre les étapes d'un procédé selon l'une des revendications précédentes, lorsque le programme est exécuté sur une unité de contrôle et/ou de diagnostic de ladite éolienne (1).

**11.** Eolienne (1) comportant des moyens de mesure de la vitesse de rotation du rotor, des moyens de mesure de l'angle d'inclinaison des pales de l'éolienne, des moyens de mesure de la puissance générée par la machine de conversion de ladite éolienne, et des moyens de détermination de la vitesse du vent dans le plan du rotor de l'éolienne aptes à mettre en oeuvre le procédé selon l'une des revendications 1 à 8.

**12.** Eolienne selon la revendication 11, comportant un système de contrôle et d'acquisition de données en temps réel qui comprend lesdits moyens de mesure de la vitesse de rotation dudit rotor, lesdits moyens de mesure de l'angle d'inclinaison des pales de l'éolienne, et lesdits moyens de mesure de la puissance générée par la machine de conversion de ladite éolienne.

## Patentansprüche

**1.** Verfahren zur Bestimmung der Windgeschwindigkeit in der Ebene eines Rotors (PR) einer Windkraftanlage (1), bei dem die folgenden Schritte durchgeführt werden:

    a) die Drehgeschwindigkeit des Rotors der Windkraftanlage, der Neigungswinkel der Flügel der Windkraftanlage und die von einer Umwandlungsmaschine der Windkraftanlage erzeugte Leistung werden gemessen (MES);
    b) es wird ein dynamisches Modell der Windkraftanlage (MEO) konstruiert, das die Drehgeschwindigkeit des Rotors der Windkraftanlage mit der Windgeschwindigkeit in der Ebene des Rotors, mit dem Neigungswinkel der Flügel der Windkraftanlage und mit der von der Umwandlungsmaschine der Windkraftanlage erzeugten Leistung verbindet;
    c) ein dynamisches Modell des Winds (MVE) wird mittels eines Random-Walk-Modells der zweiten Ordnung konstruiert; und
    d) die Windgeschwindigkeit auf der Ebene des Rotors (PR) wird mittels eines Unscented Kalman-Filters, das an das dynamische Modell der Windkraftanlage (MEO), das dynamische Modell des Winds (MVE) angewendet wird, und ausgehend von den Messungen (MES) der Drehgeschwindigkeit des Rotors, des Neigungswinkels der Flügel der Windkraftanlage und der von der Umwandlungsmaschine der Windkraftanlage erzeugten Leistung bestimmt.

**2.** Verfahren zur Bestimmung der Windgeschwindigkeit nach Anspruch 1, wobei das dynamische Modell des Winds (MVE) folgendermaßen geschrieben wird:

$$\begin{cases} \begin{bmatrix} \dfrac{dv_1(t)}{dt} \\ \dfrac{dv_2(t)}{dt} \end{bmatrix} = \begin{bmatrix} 0 & 1 \\ 0 & 0 \end{bmatrix} \begin{bmatrix} v_1(t) \\ v_2(t) \end{bmatrix} + \begin{bmatrix} 0 \\ \eta(t) \end{bmatrix} \\ \quad v(t) = \begin{bmatrix} 1 & 0 \end{bmatrix} \begin{bmatrix} v_1(t) \\ v_2(t) \end{bmatrix} \end{cases}$$

mit $v_1(t)$ die Windgeschwindigkeit in der Ebene des Rotors, $v_2(t)$ die Ableitung der Windgeschwindigkeit in der Ebene

des Rotors, $\eta(t)$ ein weißes Rauschen eines Mittelwerts Null und $v(t) = v1(t)$.

3. Verfahren zur Bestimmung der Windgeschwindigkeit nach einem der vorhergehenden Ansprüche, wobei das dynamische Modell der Windkraftanlage (MEO) folgendermaßen geschrieben wird:

$$\frac{d\omega(t)}{dt} = \frac{1}{2J}\pi\rho R^3 C_q\big(\beta(t),\lambda(t)\big)v(t)^2 - \frac{P_g(t)}{J\omega(t)} - \frac{1}{J}T_l(t)$$

mit $\omega(t)$ die Drehgeschwindigkeit des Rotors, J ist das Trägheitsmoment der kinematischen Kette der Windkraftanlage, $\rho$ ist die Dichte der Luft, R ist der Radius des Rotors, $C_q$ ist der Leistungskoeffizient, $\beta(t)$ ist der Neigungswinkel der Flügel, $\lambda(t)$ ist das Verhältnis der Geschwindigkeit an der Flügelspitze zur Windgeschwindigkeit in der Ebene des Rotors, $P_g(t)$ die von der Umwandlungsmaschine der Windkraftanlage erzeugte Leistung, $v(t)$ die Windgeschwindigkeit in der Ebene des Rotors und $T_i(t)$ das Verlustmoment entlang der kinematischen Kette der Windkraftanlage.

4. Verfahren zur Bestimmung der Windgeschwindigkeit nach Anspruch 3, wobei das Verlustmoment $T_i(t)$ als ein Rauschen angesehen wird.

5. Verfahren zur Bestimmung der Windgeschwindigkeit nach einem der Ansprüche 3 oder 4, wobei der Leistungskoeffizient $C_q$ mittels einer Kartographie der Windkraftanlage erhalten wird.

6. Verfahren zur Bestimmung der Windgeschwindigkeit nach einem der vorhergehenden Ansprüche, wobei das Verfahren die Längskomponente der mittleren Windgeschwindigkeit auf der Ebene des Rotors bestimmt.

7. Verfahren zur Bestimmung der Windgeschwindigkeit nach einem der vorhergehenden Ansprüche, wobei das Unscented Kalman-Filter an die Zustandsgleichung angewendet wird:

$$\begin{cases} \begin{bmatrix} \dfrac{dx_1(t)}{dt} \\[1.5ex] \dfrac{dx_2(t)}{dt} \\[1.5ex] \dfrac{dx_3(t)}{dt} \end{bmatrix} = \begin{bmatrix} \dfrac{1}{2J}\pi\rho R^3 C_q\left(\beta(t),\dfrac{Rx_1(1)}{x_2(t)}\right)x_2(t)^2 - \dfrac{P_g(t)}{Jx_1(t)} \\[1.5ex] x_3(t) \\[1ex] 0 \end{bmatrix} + \begin{bmatrix} \mu_1(t) \\ 0 \\ \mu_2(t) \end{bmatrix} \\[6ex] y(t) = \begin{bmatrix} 1 & 0 & 0 \end{bmatrix}\begin{bmatrix} x_1(t) \\ x_2(t) \\ x_3(t) \end{bmatrix} + \xi(t) \end{cases}$$

mit $x_1(t) = \omega(t)$, $x_2(t) = v(t)$, $x_3(t) = \dfrac{dv(t)}{dt}$, $\omega(t)$ die Drehgeschwindigkeit des Rotors, J ist das Trägheitsmoment der kinematischen Kette der Windkraftanlage, $\rho$ ist die Dichte der Luft, R ist der Radius des Rotors, $C_q$ ist der Leistungskoeffizient, $\beta(t)$ ist der Neigungswinkel der Flügel, $P_g(t)$ die von der Umwandlungsmaschine der Windkraftanlage erzeugte Leistung, $v(t)$ die Windgeschwindigkeit in der Ebene des Rotors, $\mu_1(t)$ und $\mu_2(t)$ sind unabhängiges weißes Rauschen eines Mittelwerts Null, $y(t)$ der gemessene Ausgang, der sich bei der Geschwindigkeit des Rotors $\omega(t)$ verfälscht durch ein weißes Rauschen $\xi(t)$ identifiziert.

8. Verfahren zur Bestimmung der Windgeschwindigkeit nach einem der vorhergehenden Ansprüche, wobei die Windgeschwindigkeit mittels der folgenden Schritte bestimmt wird:

    i) k=0, der Zustandsvektor $\hat{x}_a(0|0) = m(0)$ und ein Zustand der Kovarianzmatrix $P(0|0) = P_0$ werden initialisiert;
    ii) zu jedem Zeitpunkt k ungleich 0 werden die Messungen $y(k)$ erfasst; und
    iii) zu jedem Zeitpunkt k ungleich Null wird die Windgeschwindigkeit $v(k)$ in der Ebene des Rotors mittels der folgenden Gleichungen bestimmt:

$$K(k) = P(k|k-1)C^T(CP(k|k-1)C^T + R)^{-1}$$

$$\begin{cases} x(k|k) = x(k|k-1) + K(k)\big(y(k) - Cx(k|k-1)\big) \\ P(k|k) = (I_3 - K(k)C)P(k|k-1) \end{cases}$$

$$v(k) = [0\ 1\ 0]\hat{x}$$

mit K die Verstärkung des Kalman-Filters, P die Kovarianz eines Gaußschen Rauschens $\mu$, $P(k|k$ - 1) die Fehlervarianz ausgehend von den Messungen des Zeitpunkts k-1, $P(k|k)$ die Fehlervarianz ausgehend von den Messungen des Zeitpunkts k, $x(k|k)$ die Schätzung von x(k) ausgehend von den Messungen der Zeit k, $x(k|k$ - 1) die Schätzung von x(k) ausgehend von den Messungen der Zeit k-1, R die Kovarianz eines Gaußschen Rauschens $\xi$, C = [1 0 0], $I_3$ die Identitätsmatrix der Abmessung 3.

9. Verfahren zur Steuerung einer Windkraftanlage (1), **dadurch gekennzeichnet, dass** die folgenden Schritte durchgeführt werden:

    a) die Windgeschwindigkeit in der Rotorebene (PR) der Windkraftanlage (1) wird mittels des Verfahrens nach einem der vorhergehenden Ansprüche bestimmt;
    b) die Windkraftanlage (1) wird abhängig von der Windgeschwindigkeit in der Ebene des Rotors der Windkraftanlage (1) gesteuert.

10. Computerprogrammprodukt, das Codeanweisungen enthält, die eingerichtet sind, um die Schritte eines Verfahrens nach einem der vorhergehenden Ansprüche durchzuführen, wenn das Programm auf einer Steuer-und/oder Diagnoseeinheit der Windkraftanlage (1) ausgeführt wird.

11. Windkraftanlage (1), die Messeinrichtungen der Drehgeschwindigkeit des Rotors, Messeinrichtungen des Neigungswinkels der Flügel der Windkraftanlage, Messeinrichtungen der von der Umwandlungsmaschine der Windkraftanlage erzeugten Leistung und Einrichtungen zur Bestimmung der Windgeschwindigkeit in der Ebene des Rotors der Windkraftanlage aufweist, die geeignet sind, das Verfahren nach einem der Ansprüche 1 bis 8 durchzuführen.

12. Windkraftanlage nach Anspruch 11, die ein Steuer-und Erfassungssystem von Daten in Echtzeit aufweist, das die Messeinrichtungen der Drehgeschwindigkeit des Rotors, die Messeinrichtungen des Neigungswinkels der Flügel der Windkraftanlage und die Messeinrichtungen der von der Umwandlungsmaschine der Windkraftanlage erzeugten Leistung enthält.

**Claims**

1. Method for determining wind speed in the plane of a rotor (PR) of a wind turbine (1), wherein the following steps are implemented:

    a) measuring (MES) the rotational speed of said rotor of said wind turbine, the tilt angle of the blades of said wind turbine, and the power generated by a conversion machine of said wind turbine;
    b) constructing a dynamic model of said wind turbine (MEO) that links the rotational speed of said rotor of said wind turbine to said wind speed in said plane of the rotor, to said tilt angle of said blades of said wind turbine and to said power generated by said conversion machine of said wind turbine;
    c) constructing a dynamic model of the wind (MVE) by way of a second-order random walk model; and
    d) determining said wind speed on said plane of said rotor (PR) by way of an unscented Kalman filter applied to said dynamic model of said wind turbine (MEO), to said dynamic model of the wind (MVE), and based on said measurements (MES) of said rotational speed of said rotor, of said tilt angle of said blades of the wind turbine, and of said power generated by said conversion machine of the wind turbine.

2. Method for determining wind speed according to Claim 1, wherein said dynamic model of the wind (MVE) is written

$$\begin{cases} \begin{bmatrix} \frac{dv_1(t)}{dt} \\ \frac{dv_2(t)}{dt} \end{bmatrix} = \begin{bmatrix} 0 & 1 \\ 0 & 0 \end{bmatrix} \begin{bmatrix} v_1(t) \\ v_2(t) \end{bmatrix} + \begin{bmatrix} 0 \\ \eta(t) \end{bmatrix} \\ v(t) = \begin{bmatrix} 1 & 0 \end{bmatrix} \begin{bmatrix} v_1(t) \\ v_2(t) \end{bmatrix} \end{cases}$$

where $v_1(t)$ is the wind speed in the plane of the rotor, $v_2(t)$ is the derivative of the wind speed in the plane of the rotor, $\eta(t)$ is a zero-mean white noise and $v(t) = v1(t)$ .

3. Method for determining wind speed according to either of the preceding claims, wherein said dynamic model of said wind turbine (MEO) is written:

$$\frac{d\omega(t)}{dt} = \frac{1}{2J}\pi\rho R^3 C_q(\beta(t), \lambda(t))v(t)^2 - \frac{P_g(t)}{J\omega(t)} - \frac{1}{J}T_l(t)$$

where $\omega(t)$ is the rotational speed of said rotor, J is the moment of inertia of the kinematic chain of said wind turbine, $\rho$ is the density of air, R is the radius of said rotor, $C_q$ is the power coefficient, $\beta(t)$ is said tilt angle of said blades, $\lambda(t)$ is the ratio of the speed at the tip of the blade to said wind speed in said plane of the rotor, $P_g(t)$ is said power generated by said conversion machine of said wind turbine, $v(t)$ is said wind speed in said plane of the rotor and $T_l(t)$ is the torque loss along said kinematic chain of said wind turbine.

4. Method for determining wind speed according to Claim 3, wherein said torque loss $T_l(t)$ is considered to be noise.

5. Method for determining wind speed according to either of Claims 3 and 4, wherein said power coefficient $C_q$ is obtained by way of a map of said wind turbine.

6. Method for determining wind speed according to one of the preceding claims, wherein said method determines the longitudinal component of the average wind speed on said plane of the rotor.

7. Method for determining wind speed according to one of the preceding claims, wherein said unscented Kalman filter is applied to the state equation:

$$\begin{cases} \begin{bmatrix} \frac{dx_1(t)}{dt} \\ \frac{dx_2(t)}{dt} \\ \frac{dx_3(t)}{dt} \end{bmatrix} = \begin{bmatrix} \frac{1}{2J}\pi\rho R^3 C_q\left(\beta(t), \frac{Rx_1(t)}{x_2(t)}\right)x_2(t)^2 - \frac{P_g(t)}{Jx_1(t)} \\ x_3(t) \\ 0 \end{bmatrix} + \begin{bmatrix} \mu_1(t) \\ 0 \\ \mu_2(t) \end{bmatrix} \\ y(t) = \begin{bmatrix} 1 & 0 & 0 \end{bmatrix} \begin{bmatrix} x_1(t) \\ x_2(t) \\ x_3(t) \end{bmatrix} + \xi(t) \end{cases}$$

where $x_1(t) = \omega(t)$, $x_2(t) = v(t)$, $x_3(t) = \frac{dv(t)}{dt}$ , rotational speed of said rotor, J is the moment of inertia of the kinematic chain of said wind turbine, $\rho$ is the density of air, R is the radius of said rotor, $C_q$ is the power coefficient, $\beta(t)$ is said tilt angle of said blades, $P_g(t)$ is said power generated by said conversion machine of said wind turbine, $v(t)$ is said wind speed in said plane of the rotor, $\mu_1(t)$ and $\mu_2(t)$ are independent zero-mean white noises, $y(t)$ is the measured output representing said speed of the rotor $\omega(t)$ corrupted by white noise $\xi(t)$.

8. Method for determining wind speed according to one of the preceding claims, wherein said wind speed is determined by way of the following steps:

i) initializing k=0, the state vector $\overset{\wedge}{x}_a(0|0) = m(0)$ and a state of the covariance matrix P(0|0) = $P_0$;
ii) at each time k other than 0, acquiring said measurements y(k); and
iii) at each time k other than 0, determining the wind speed v(k) in the plane of the rotor by way of the following equations:

$$K(k) = P(k|k-1)C^T(CP(k|k-1)C^T + R)^{-1}$$

$$\begin{cases} x(k|k) &= x(k|k-1) + K(k)(y(k) - Cx(k|k-1)) \\ P(k|k) &= (\mathbf{I}_3 - K(k)C)P(k|k-1) \end{cases}$$

$$v(k) = [0 \ 1 \ 0]\hat{x}$$

where K is the gain of the Kalman filter, P is the covariance of a Gaussian noise $\mu$, P(k|k-1) is the error variance based on the measurements of said time k-1, P(k|k) is the error variance based on the measurements of said time k, x(k|k) is the estimate of x(k) based on the measurements of the time k, x(k|k-1) is the estimate of x(k) based on the measurements of the time k-1, R is the covariance of a Gaussian noise $\xi$, C = [1 0 1], $I_3$ is the 3-dimensional identity matrix.

9. Method for controlling a wind turbine (1), **characterized in that** the following steps are implemented:

   a) determining the wind speed in the rotor plane (PR) of the wind turbine (1) by way of the method according to one of the preceding claims;
   b) controlling said wind turbine (1) on the basis of said wind speed in said plane of the rotor of said wind turbine (1).

10. Computer program product comprising code instructions designed to implement the steps of a method according to one of the preceding claims when the program is executed on a control unit and/or diagnostic unit of said wind turbine (1) .

11. Wind turbine (1) comprising means for measuring the rotational speed of the rotor, means for measuring the tilt angle of the blades of the wind turbine, means for measuring the power generated by the conversion machine of said wind turbine, and means for determining the wind speed in the plane of the rotor of the wind turbine, which means are able to implement the method according to one of Claims 1 to 8.

12. Wind turbine according to Claim 11, comprising a real-time data acquisition and control system that comprises said means for measuring the rotational speed of said rotor, said means for measuring the tilt angle of the blades of the wind turbine, and said means for measuring the power generated by the conversion machine of said wind turbine.

[Fig 1]

[Fig 2]

[Fig 3]

[Fig 4]

[Fig 5]

[Fig 6]

[Fig 7]

**EP 3 862 560 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3013777
- US 2015145253 A
- CA 3053618 A1
- FR 2976630 A1
- US 20120321463 A